# EUROPEAN PATENT APPLICATION

(11) **EP 3 517 205 A1**
(43) Date of publication of application: **31.07.2019**
(21) Application number: 16781046.4
(22) Date of filing: 26.09.2016
(51) Int. Cl.: B01J 8/08, B01J 8/10, B01J 19/18, B01J 4/00, B01F 7/00

(54) **REACTOR, SYSTEM AND METHOD FOR PROCESSING POLYMERS**

(71) Applicant: Servicios Industriales Cortes Y Salazar SPA, Las Condes - Santiago (CL)
(72) Inventor: CORTES VERGARA, Sergio Guillermo, Las Condes - Santiago (CL)
(74) Representative: Herrero & Asociados, S.L.
(86) International application number: PCT/CL2016/000055
(87) International publication number: WO 2018/053659

(57) **Abstract**

The present invention consists in a reactor (100), a system and a method to process products such as polymers, where the reactor (100) is formed by a vertical structure made up by a concentric ferrous inner tank (100D) and an external tank (100E) opened by the lower end, between which a jacket (103) is arranged, where said reactor comprises: an upper lid (104); at least an inlet for material(110); an overhead valve (113) in the at least inlet duct for material (110); at least one chimney (115); a stirring unit (120) comprising a vertical axis (121) connected to: a plurality of main blades (126) fixed to it in a perpendicular way; a set of secondary blades (127) perpendicularly joint to a sub-axis (128) connected in angle to said vertical axis (121); a structure of lower blades (129); a discharge element (130) comprising an opening and closing valve (131) connected to a tray (132); and an air inlet (140) located in one of the faces of the external tank (100E).

## Description

### FIELD OF THE INVENTION

The present invention relates to a reactor, a system and a method to process different products or materials, such as polymers, mainly PET, paint and in general any kind of gum-like polymer or elastomers used for instance to form products as tires or others, where high efficiency rates are reached at low cost through a simple design.

### BACKGROUND OF THE INVENTION

The needs of modern times have forced industry to look for efficient solutions for all its processes, mainly for those applications requiring high energy resources, which many times have great impact on the environment and that are currently becoming more and more expensive.

An example of said needs relates to the reduction of waste material in order to help the good use of energy and of available resources providing a reduction of costs and in turn helping the environment.

In such industrial processes as recycling or in others of the chemical industry, so-called reactors are used, for example to recreate specific conditions of pressure, temperature, humidity, etc.

This kind of devices is largely disclosed in the state of the art and they basically consist in a vertical or horizontal cylinder, inside of which raw material - optionally preprocessed from a previous process- is introduced. Inside the reactor, the material chemically reacts due to the specific conditions of temperature and pressure, which operation is many times supplemented with means that stir the content inside the reactor. After a predetermined time, the processed material is removed from the reactor and is optionally processed again, so that to obtain it in the way desired.

An example of this kind of device is disclosed by the document WO 2007109889, which describes a reactor for high temperature and high pressure reactions comprising an external reactor adapted to endure a reaction pressure and reaction temperature, wherein the external reactor has a sealable reactor lid. It also comprises an internal vessel inside the external reactor to contain a reaction solution and at least a reaction vessel, wherein the internal vessel opens to the external reactor, so that the reaction pressure of the internal vessel and of the external reactor are substantially equalized and the steam in the internal vessel goes to the external vessel. It also comprises a steam injector communicated with the internal vessel to heat the reaction solution, an outlet in the external vessel to exhaust the steam of the external reactor and the internal reactor, and an outlet of the external reactor to drain a liquid contained between the external reactor and the internal vessel.

Similarly, document US 3130015 discloses a pressure tank adapted to contain chemical reactions involving corrosive fluids under high pressure and temperature conditions comprising: an external pressure resistant housing with a cylindrical portion and heads with openings on each side of said cylindrical portion, where said external housing is circumferentially divided in at least two segments. It also comprises a disposable lining, which is relatively thin and resistant to corrosion inside said metal housing with a reinforcement pressure resistant portion near the head, which also provides fastening for an external conduit. The tank also has deflectors in the lining and the stirring means.

A frequent application of the reactors as described above is their use in recycling processes developed before the constant concern for the use of waste materials, with the effort being focused on obtaining products of a quality that approaches that obtained when the product is manufactured with virgin raw material.

One of the main applications, for example, corresponds to the manufacture of bottles, tires or any kind of gum-like polymers, for which efforts have been made in order to promote the recirculation and recycling of said products, which are increasingly consumed by people, to seek to remove them from the volume of solid wastes, which has also increased.

In the state of the art, some solutions are disclosed that have tried to deal with this problem through the use of reactors, such as, for example, document US5597852, which discloses a procedure and device for the recycling of solid polyester material. This is introduced into the recycling component in a finely distributed way through a carrying device and volumetric dosing. Inside the deposit air or gas is introduced through feeding points distributed over the height of the deposit. At the outlet provided on the lower end of the deposit, there is a measuring device installed for the agglomerate, from which the recycling material treated in this way is supplied to a fusion reactor eventually with the aid of a conveying screw and a funnel or extruder.

Document US 60448907 also describes an apparatus to convert some recirculated materials into polyester polyols including a reactor vessel having inside volume, a stirring member assembled in a rotating form inside the reactor vessel, a rotating device connected to the stirring member and a heater inside the vessel in order to increase the temperature of the reactor's inside volume by at least 175°C. The reactor vessel has an inner wall and an external wall with a space between both of them. The heater emits a heated fluid through the space between the inside wall and the outside wall. The stirring member includes a tubular member extending through the inner volume of the vessel and a plurality of stirring arms.

In addition, document WO 2004063248 proposes a method for the solid state polymerization of plastic residues, using a turbo-heater comprising a cylindrical tubular body provided with a heating jacket and closed on its opposed ends by end plates, provided with inlet and outlet openings and having a coaxial rotor with blades fixed thereto in a rotating way. In this way, the plastic is heated in an inert atmosphere while flowing in a thin, turbulent, dynamic layer in contact with the jacket heated to at least 200°C, so as to obtain a final material with an intrinsic average viscosity equal to or above 0.85 dl/g.

Although other similar devices and procedures are proposed in the state of the art related to the use of reactors for different applications, not one of them provides a solution allowing to develop inside a reactor sufficiently suitable conditions of pressure and temperature to implement the chemical reactions that allow for obtaining products with high quality indexes. This drawback becomes worse before the lack of simple but suitable and well studied means for the regulation and control of conditions inside the reactor, so as to favor production with high indexes of performance, and simple and low-cost construction.

An object of the present invention is therefore to provide a device, system and procedure for the generation of specific and proper conditions inside a reactor allowing the development of different applications with a high level of efficiency, and simple and low-cost construction.

A particular object of the present invention is to provide a device, system and procedure for the processing of polymers, such as PET, with high levels of efficiency, low contamination levels, simple and low-cost construction, particularly where the properties of the product obtained are equal to or better than the properties of the virgin raw material.

### DESCRIPTION OF THE INVENTION

The present invention consists in a system to process different products or materials, such as polymers, especially PETs, paint and in general any kind of gum-like or elastomeric polymers such as may be found in tires among other articles.

The system advantageously allows the reaction of solid to semi-liquid material thanks to the positive conditions of temperature and pressure reached inside a reactor, allowing the suspension of the material within the reactor in a great air mass, emulating a system wherein G forces tend to zero and thus acting to restore the initial properties of the product to be processed. Through said system, the quality of the final product obtained is equal to the product in virgin condition.

The system of the present invention is composed of a reactor that can be supported by a metallic structure. Said reactor is connected to a heating unit composed of a heating unit and an air-injecting unit.

The system comprises an electronic type control unit (PLC) configured in such a way to control the operation and different parameters of the system at different times, such as operation of the heating unit and the flow of air supplied to the reactor, based on the information provided by at least one sensor arranged therein or in other component of the system.

The system of the present invention also comprises a regeneration unit formed by equipment made up by a chamber connected to at least one air outlet of the reactor, on one side, and the heating unit on the other side. The regeneration unit is advantageously designed to condition the steam and gases from the reactor, transferring carbon atoms and/or other properties before being recirculated to the reactor; thus, the quality of the final product obtained by the process according to the present system is improved.

The reactor of the present invention is formed by a vertical structure composed of two ferrous concentric tanks that form an air jacket between them. The upper part of the reactor comprises a lid containing at least ones inlet of material regulated by a rocker valve. In the lid of the reactor at least a chimney is also arranged for the discharge of a flow of air from inside the reactor as regulated by an overhead valve, where according to a preferred embodiment of the invention, the reactor comprises two chimneys, where one of them is in communication with the regeneration unit in order to recirculate part of the gases coming from the reactor.

Inside the inner tank, the reactor comprises a stirring unit composed of a vertical axis driven by a rotating motor, where said axis also comprises a plurality of blades in different positions, of different size, type and angle to stir the content inside a reactor. Advantageously, through this configuration of blades a homogeneous stirring of the material is achieved inside the reactor in a circular upwards and downwards direction, which allows for increasing the quality of the final processed product.

The reactor is connected through its bottom to a discharge element comprising an opening and closing valve connected to a discharge tray to discharge the material from the inside of the reactor. It also comprises an air inlet at the bottom connected to the outlet of the heating equipment that allows the air supplied by the heating unit to enter the rector.

The configuration of the reactor of the present invention advantageously allows generating high pressure conditions inside, while its design allows different levels of temperature to be achieved in different zones of the reactor. By said design, parameterizing the temperature and pressure conditions inside the reactor is possible, without need for a number of sensors and sophisticated monitoring equipment. At the same time, the high levels of temperature and pressure obtained in a controlled manner inside the reactor allow for minimizing the heat supplied by the heating unit and achieving an efficient use of energy.

Advantageously, the joint operation of all parts and elements of the system, added to the fact that the materials and other components of the reactor have been carefully selected to allow the opening of molecules of the material processed and, with this, to favor chemical reactions, makes it possible that the material processed achieves a recovery performance providing the same properties of the virgin material.

In a second aspect, the present invention also consists in a method of processing products such as polymers through the system already defined above, and which comprises the steps of:
- Introducing the material to be processed to the inner tank of a reactor through at least one inlet of material.
- Supplying air to a reactor's air inlet through an air injection unit of a heating unit.
- Providing information to a control unit through at least one temperature sensor located at the air outlet of the heating unit to control the temperature supplied by said heating unit.
- Circulating the air supplied through a jacket inside the reactor.
- Stirring the material inside the reactor through the circular upwards and downwards displacement of a number of blades from a stirring unit.
- Regulating the pressure inside the reactor through the discharge of gases through at least one chimney.
- Directing the gases being discharged through the at least one chimney to a regeneration unit.
- Directing the gases conditioned in the regeneration unit to the air-injecting unit.
- Opening a closing and opening valve located at the bottom of the reactor and removing the processed product.

### BRIEF DESCRIPTION OF FIGURES

In order that the present invention may be more readily understood, embodiments thereof will now be described, by way of example only, with reference to the accompanying drawings, of which:
- Figure 1 depicts a general diagram of the components making up the system of the present invention.
- Figure 2 depicts a cross-section longitudinal view of the reactor that is part of the system of the present invention.
- Figure 3 depicts a cross-section longitudinal view of the reactor that is part of the system of the present invention.
- Figure 4 depicts a cross-section longitudinal view of the heating unit that is part of the present invention's system.
- Figure 5 depicts a cross-section longitudinal view of the heating unit that is part of the present invention's system.
- Figure 6 depicts a cross-section longitudinal view of the regeneration unit that is part of the present invention's system.

### DETAILED DESCRIPTION OF FIGURES

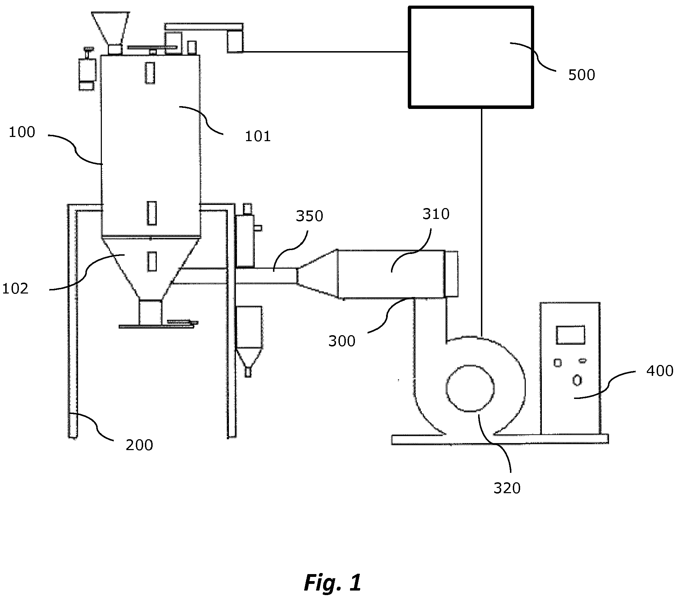

According to Figure 1 there is a system composed of a reaction tank or reactor 100 formed by a vertical structure made up by an upper cylindrical section 101 and a lower conical section 102. Said reactor 100 can be supported by a supporting structure 200 preferably comprising a vertical structure manufactured of steel, which allows bearing both the reactor 100 and the discharge elements of products from the reactor and other elements as for example conveyor belts, among others.

The reactor 100 is preferably connected by the lower conical section 102 to a heating unit 300 through an admission pipe 350, where said heating equipment 300 is made up of a heating unit 310 and an air-injecting unit 320, with the latter preferably comprising a differential turbo-compressor blower of high power and flow rate driven by an electric motor (not shown).

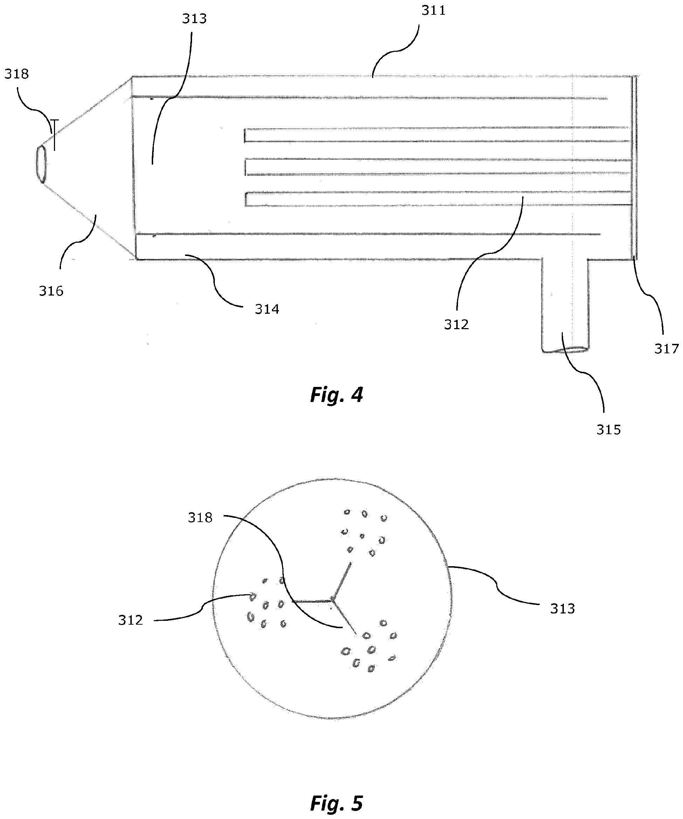

In addition, the heating unit 310 comprises a duplex concentric chamber 311 of cylindrical shape where a plurality of electric heaters 312 is inserted as seen in Figure 4.

The duplex concentric chamber 311 comprises and inner chamber 313, an external chamber 314, an inlet of air 351, an outlet of air 316 and a lid 317. The air inlet 315 is connected to the external chamber 314 and the latter is in turn in communication with the inner chamber 313 on the back, so that the air entering the heating unit 310 from the air injecting unit may flow through the external chamber 314 in a circular way, and then gradually entering by the rear to the inner chamber 313 to later flow to the air outlet 316.

Inside the inner chamber 313, there are electric heaters 312, which are preferably of the blade type and, as seen in Figure 5, they are arranged under a star configuration joint to an axis of three-branch heaters 320 or in the form of "Y", so that each branch supports a group of heaters arranged in parallel. According to a preferred embodiment of the invention, the heating unit 310 is composed of 20 to 50 electric heaters, preferably of a group of 40 heaters distributed in three branches inside the chamber 313.

Going on with Figure 1, there is a system that comprises a control unit 400 preferably consisting in a programmable logic controller (PLC) configured in such a way to control the operation and different parameters of the system in at different times as defined by a sequencer.

According to a preferred embodiment of the invention, the control unit 400 is adapted to control for instance the operation of the electric heaters 312 of the heating unit 310, the flow of air supplied by the air-injecting unit 320, the outlet of air through the at least one chimney of the reactor and the stirring speed of the material inside the reactor.

According to a preferred embodiment of the invention, the control unit 400 controls the activation and deactivation of the electric heaters 312 of the heating unit 310, based on the information provided by at least a temperature sensor 318 arranged at the air outlet 316, which, according to a preferred embodiment, consists of a PT100 probe to measure the temperature at the outlet of the heating unit 310.

Going on with Figure 1, the system of the present invention also comprises a regeneration unit 500 formed by an equipment made up by a chamber 501 connected to at least one air outlet 100C of the reactor 100. In said chamber, vapors concentrate and gases from the reactor are separated.

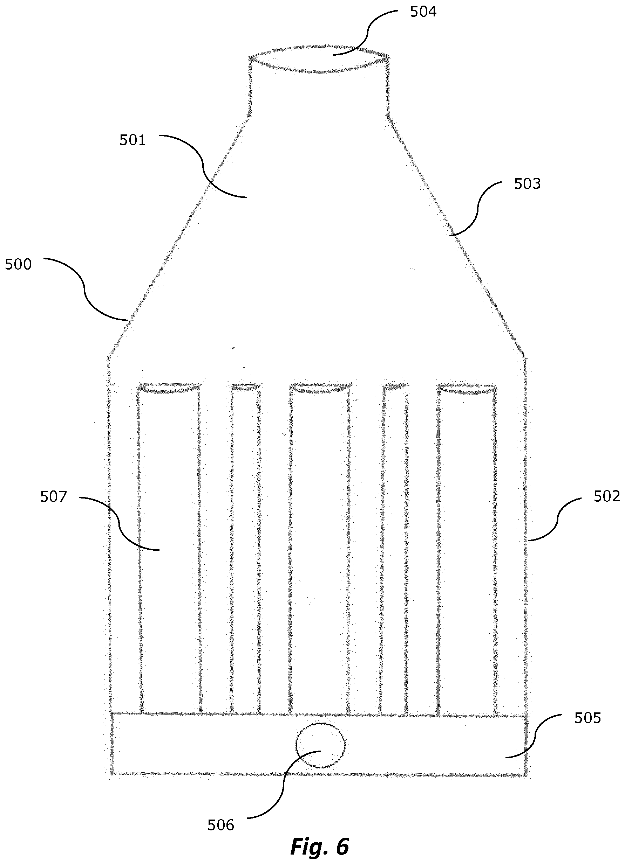

According to Figure 6, chamber 501 of the regeneration unit has a cylindrical lower section 502 and a conical upper section 503 leading to an upper outlet 504. At the bottom, the regeneration unit comprises a bearing 505 isolated from the chamber 501 that comprises an opening 506 for the entering of air from the reactor. On its lower part, the bearing 505 also comprises holes (not shown) over which a plurality of cylindrical chimneys 507 of different diameters are arranged and located inside the chamber 501. Preferably, all components of the regeneration unit are manufactured of carbon steel.

Thus, the air from the reactor enters the regeneration unit 500 through the hole 506 and accrues in the bearing 505 to later flow towards chamber 501 through the cylindrical chimneys. This multi-chamber configuration with chimneys of different diameters allow the air to have a proper residence time inside the regeneration unit 500 to allow the air molecules to enrich with the carbon present in the materials of said unit, which will favor the chemical reactions inside the reactor.

Once the gases have remained inside the regeneration unit 500 for a definite time, they come out from it through the upper outlet 504 and they are led to the air-injecting unit 320 and later to the heating unit 310, so that to be recirculated again to the inside of the reactor 100.

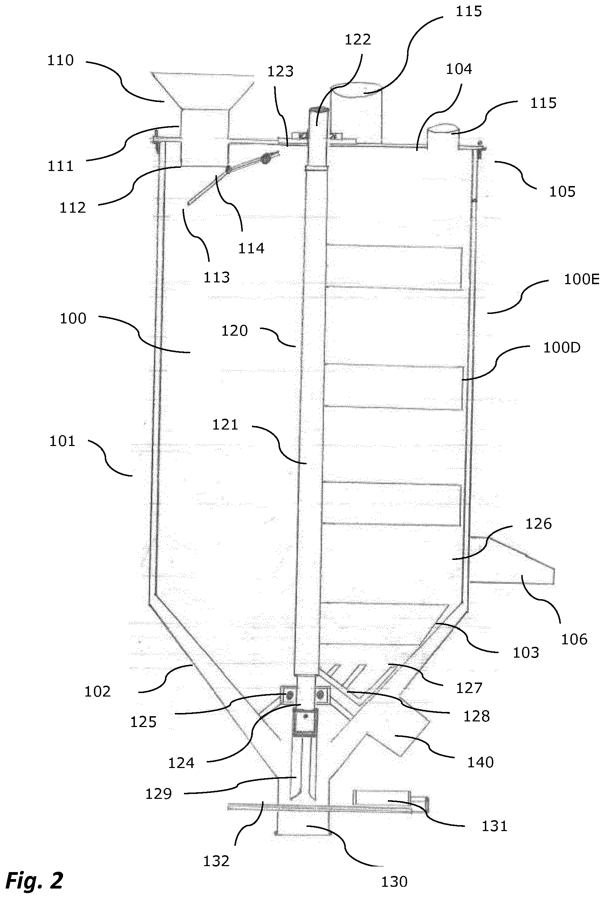

According to Figure 2, the reactor 100 is formed by a vertical structure made up by two concentric carbon steel tanks (100D, 100E), each of them with an upper cylindrical section 101 and a lower conical section 102 opened by its lower end. In this way, an air jacket 103 is formed between both tanks (100D, 100E); said jacket has a structure of cells inside (not shown) made of carbon steel with a honeycomb-type cross section and arranged in zigzag along the jacket 103. Preferably, the reactor 100 or part thereof is coated by a thermal jacket (not shown) that is useful to improve the insulation conditions and to keep the best temperature inside thereof. The thermal jacket can be manufactured of mineral wool for instance or any other proper insulating material. Additionally, the thermal jacket can coat other components of the system, as for example the admission pipe 305.

The upper part of the reactor 100 comprises a lid 104 made up by a plate joint to the upper edge of the external tank 100E through proper fastening means. Said lid 104 at least comprises one inlet for material 110 preferably of cylindrical shape and made of aluminum, which has a portion of the external duct 111 with the form of inverted cone and a portion of the inner duct 112 located inside the inner tank 100D. On the lower edge of said duct 112 an overhead valve 113 made of stainless steel is configured with a pivotal point 114 in said lower edge of the duct allowing to regulating the opening or closing of the valve.

According to a preferred embodiment of the invention, the reactor 100 comprises two chimneys 115, with one of them located near the lid and the other one near the center; the latter is also connected to the regeneration unit 500 to recirculate part of the gases coming from the inside of the reactor's inner chamber. In addition, the chimneys have -each of them- a perforated plate at their bottom to keep optimal pressure conditions inside the reactor. Preferably, the chimneys 115 comprise a system of funnels in zigzag inside (not shown) to increase the traveled distance of gases outside the reactor, in order to cool and condensate part of said gases and to recover the volatile components of the material inside the reactor.

The reactor 100 comprises inside the inner tank 100D a stirring unit 120 composed of a preferably cylindrical and hollow vertical axis 121 connected by its upper end to an upper support 122 that projects outwards the lid 104, preferably through a gland seal 123 to be operated by a rotating motor (not shown). In addition, the lower end of the vertical axis 121 is connected to a lower support 124 fixed to the walls of the inner tank 100D through a bearing 125.

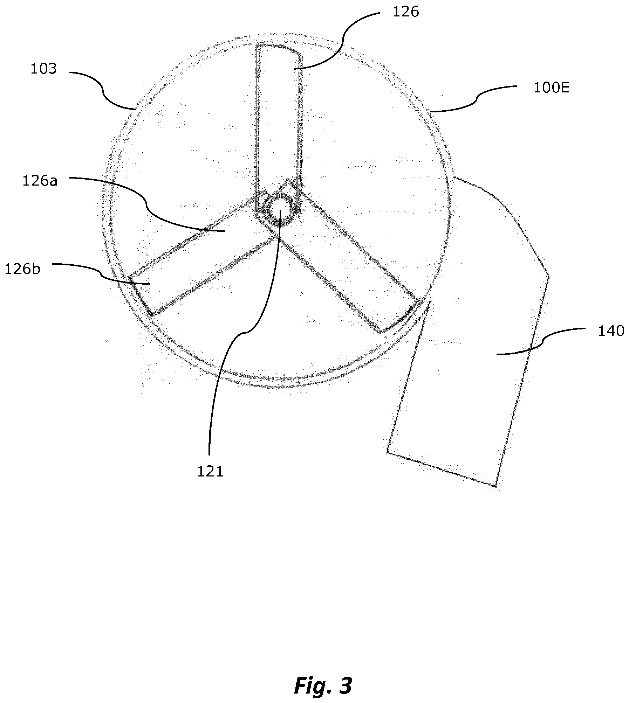

The vertical axis 121 comprises a plurality of main blades 126 fixed to it in a perpendicular way and distributed throughout its extension. As seen in figure 3, the main blades 126 are vertically aligned each other and they also have different angles in relation to the tank in order to generate different turn radius and torque. Preferably, the main blades 126 are made up of a body with two portions, where the first portion 126a being the nearest to the vertical axis 121 forms an angle of 10° to 30° with respect to it. Additionally, a second portion 126b that is the nearest to the walls of the reactor forms an angle of 25° to 45° with the vertical axis.

According to a preferred embodiment, the vertical axis 121 comprises in its lower portion a set of secondary blades 127 perpendicularly joint to a sub-axis 128 connected in angle to the vertical axis 121. Through said configuration, the material located in the intermediate portion of the conical lower section 102 of the reactor is displaced.

The reactor 100 is connected by its lower conical part 102 to a discharge element 130. Said discharge element comprises an opening and closing valve 131, preferably driven in a pneumatic way and connected to a metallic tray 132, preferably made of aluminum, having a hole in such a way that when said tray is displaced by the opening and closing valve and the hole becomes aligned with the reactor's lower outlet, the material can be discharged by gravity from the inside of the reactor. Over the opening and closing valve 131, inside the reactor a structure of lower blades 129 is configured connected to the lower support 124, which allow stirring and displacing the material from the bottom of the reactor to the upper sections thereof.

In the lower part of the reactor 100, preferably on one of the faces of the external tank there is an air inlet 140 connected to the admission pipe 350 of the heating unit 300 allowing the entry of the air supplied by said unit to the external tank 100E of the reactor 100. According to Figure 3, the air inlet 140 has a cross section, preferably square, which connects to the tank tangentially; this allows ordering the air molecules, so that they can circulate inside the reactor in a sweeping way, thus favoring the reactions involved.

On the outside, the reactor 100 comprises an external support 106 that can consist in a plate surrounding the whole external diameter of the reactor or part thereof, with said support being configured to be connected to the supporting structure 200.

According to the operation of the system of the present invention, initially the material recovered to be processed, as for example packages previously used, washed and sliced enters the inside of the reactor's inner tank 100 through the inlet duct for material110. Thus, the material pushes and opens the overhead valve 113 totally to be accumulated at the bottom of the reactor until reaching about ¾ of its capacity. After the entry of all material the overhead valve 113 closes.

When the material to be processed is inside the reactor 100, the air-injecting unit 320 supplies air to the heating unit 310, which heats the air and injects it to the admission way 350 for its entering the reactor later through the air inlet 140 of the reactor. At the same time, the temperature sensor 318 provides information to the control unit 400 about the temperature to the outlet of the heating unit 310, which is automatically controlled by the turning on and off of the electric heaters 312 of the heating unit 310. The temperature supplied to the inlet of the reactor preferably ranges between 40 and 60°C.

The warm air supplied flows inside the jacket 103 of the reactor heating the walls of the inner tank 100D and, therefore, the material to be processed. In addition, the structure of cells arranged inside the jacket 103 allows generating different levels of temperature throughout the vertical extension of the reactor, wherein the warm air flow speed going through the jacket 103 is regulated by the amount and size of the honeycomb-type cells arranged inside of it, providing said cells a higher restriction to the flow as it ascends through the reactor's jacket. In this way, in the upper part of the reactor temperatures in the range of 200 to 250°C are obtained, while in the intermediate part the temperatures range between 300 and 400°C. This difference of temperature is also achieved thanks to others factors such as the great pressure reached inside the reactor, the exothermic reactions produced by the material processing and to the presence of the thermal jacket wrapping up the reactor, wherein the use of more insulation at the lower part of the reactor, disregarding insulation at the upper part is preferred.

The means that get to generate this difference of temperature inside the reactor in combination with the stirring unit 120, make the material inside the reactor to become cold at the upper part by stirring and displacing said material longitudinally, also preventing said material to be reduced to ashes and to remain a long time at the lower part, which is at a greater temperature.

The stirring unit 120 in combination with the blades (126, 127, 138) acts by stirring the content inside the reactor by the circular upwards and downwards displacement. At the same time, the pressure inside the reactor is regulated through the perforated plates of the chimneys 115, which discharge the gases and vapors generated by the process. Part of said gases and vapors are directed to the regeneration unit 500 through one of the chimneys 115, being conditioned inside after a certain residence time determined for the provision of carbon atoms. After its passing through the regeneration unit 500, the gases are re-injected to the air-injecting unit 320 in order to be then recirculated inside the reactor 100.

After the product has been processed inside the reactor for a predetermined time or until the desired result is obtained and determined by the hand or automatic monitoring of the system, the material is withdrawn from the lower part of the reactor 100 through the opening of the opening and closing valve 131. Once said valve closes, the system is ready to start a new cycle of processing.

The foregoing description has been given by way of example only and it will be appreciated by a person skilled in the art that modifications can be made without departing from the scope of the present invention as defined by the claims.

## Claims

1. A reactor (100) for the processing of such products inside of it as polymers, which is formed by a vertical structure made up by a concentric ferrous inner tank (100D) and an external tank (100E) opened by the lower end, between which a jacket (103) is arranged, where said reactor comprises:
- an upper lid (104);
- at least an inlet for material(110);
- an overhead valve (113) in the at least inlet duct for material (110);
- at least one chimney (115);
- a stirring unit (120) comprising a vertical axis (121) connected to:
• A plurality of main blades (126) fixed to it in a perpendicular way;
• A set of secondary blades (127) perpendicularly joint to a sub-axis (128) connected in angle to said vertical axis (121);
• A structure of lower blades (129);
- A discharge element (130) comprising an opening and closing valve (131) connected to a tray (132);
- An air inlet (140) located in one of the faces of the external tank (100E).

2. The reactor according to claim 1, wherein the at least one one inlet duct for material (110) has a portion of external duct (111) and a portion of inner duct (112), with the latter being located inside the reactor's inner tank (100).

3. The reactor according to claim 1 or 2, which comprises two chimneys (115), with one of them located on one end of the lid (104) and the other one is near the center thereof.

4. The reactor according to any of the preceding claims, wherein the at least one chimney (115) comprises a system of zigzag funnels inside.

5. The reactor according to any of the preceding claims, wherein the at least one chimney (115) has a cylindrical shape.

6. The reactor according to any of the preceding claims, wherein the vertical axis 8121) is connected by its upper end to an upper support (122) projecting outwards of the lid (104) and where the lower end of the vertical axis (121) is connected to a lower support (124) fixed to the walls of the inner tank through a bearing (125).

7. The reactor according to any of the preceding claims, wherein the main blades (126) are displaced in a certain angle each other and have different angles with respect to the reactor (100).

8. The reactor according to claim 6, wherein the structure of the lower blades (129) is connected to the lower support (124).

9. The reactor according to claim 6, wherein the upper support (122) projects outwards of the lid (104) through a gland seal (123).

10. The reactor according to any of claims 6 to 9, wherein the upper support (122) is connected to a rotating motor.

11. The reactor according to any of the preceding claims, wherein the vertical axis (121) is cylindrical and hollow.

12. The reactor according to any of the preceding claims, wherein the discharge element (130) consists in a cylindrical portion joint to the reactor's lower end (100).

13. The reactor according to any of the preceding claims, wherein the opening and closing valve (131) corresponds to a pneumatic valve.

14. The reactor according to any of the preceding claims, wherein the tanks making up the reactor (100) have an upper cylindrical section (101) and a lower conical section (102).

15. The reactor according to any of the preceding claims, wherein the jacket (103) has a structure of cells inside with the shape of a rhombus and arranged in zigzag along thereof.

16. The reactor according to any of the preceding claims, wherein the lid (104) is made up by a plate joint to the upper edge of the external tank through fastening means.

17. The reactor according to any of preceding claims, which, or part thereof, is coated by a thermal jacket.

18. The reactor according to any of the preceding claims, wherein it comprises an external support (106) surrounding all the external diameter or part thereof.

19. A system for the processing of products inside of it such as polymers, wherein it comprises:
- a reactor (100) as that defined in claims 1 through 18;
- a supporting structure (200);
- a heating unit (300) made up by a heating unit (310) and an air-injecting unit (320);
- a control unit (400);
- a regeneration unit (500) connected to at least one air outlet of the reactor (100) and to the heating unit (300).

20. The system according to claim 19, wherein at least one chimney (110) of the reactor (100) is communicated with the inlet of the regeneration unit (500).

21. The system according to claim 19 or 20, wherein the regeneration unit (50) comprises a cylindrical lower section (502) and an upper section (503). At its bottom it comprises a bearing (505) isolated from a chamber (501) and comprising at its bottom holes over which a plurality of cylindrical chimneys (507) is formed of different diameters and located inside the chamber (501).

22. The system according to any of claims 19 through 21, wherein the air-injecting unit (320) consists in a differential turbo-compressor blower driven by an electric motor.

23. The system according to any of claims 19 through 22, wherein the heating unit (310) consists in a duplex concentric chamber (311) where a plurality of electric heaters are inserted (312) and comprising an air outlet with at least one temperature sensor (318) formed therein.

24. The system according to claim 23, wherein the concentric duplex chamber (311) also comprises an inner chamber (313), an outer chamber (314), an air inlet (315) and a lid (317).

25. The system according to any of claims 19 through 24, wherein the control unit (400) is configured in such a way to control the operation and different parameters of the system at different times as defined by a sequencer.

26. The system according to any of claims 19 through 25, wherein the control unit (400) is adapted to control the operation of the electric heaters (312) of the heating unit (310).

27. The system according to any of claims 19 through 26, wherein the outlet of the heating unit (300) is connected to an admission pipe (350) communicated with an inlet of air (140) of the reactor (100).

28. The system according to any of claims 19 through 27, wherein the supporting structure (200) comprises a vertical structure made of steel.

29. A method to process such products as polymers through the system already defined in claims 19 through 28, wherein it comprises the steps of:
- Introducing the material to be processed to the inner tank of a reactor (100) through at least one inlet duct for material (110).
- Supplying air to the air inlet (140) of a rector (100) through an air injection unit (320) and a heating unit (310) of a heating unit (300).
- Providing information to a control unit (400) through at least one sensor located at an air outlet (316) of the heating unit (310) to control the temperature and the flow of air supplied by the heating unit (300).
- Circulating the air supplied through a jacket (103) inside the reactor (100).
- Stirring the material inside the reactor (100) through the circular upwards and downwards displacement of a number of blades (126, 127, 129) from a stirring unit (120).
- Regulating the pressure inside the reactor (100) through the discharge of gases through the at least one chimney (110).
- Directing the gases being discharged through the at least one chimney (110) to a regeneration unit (500).
- Directing the gases conditioned in the regeneration unit (500) to the air-injecting unit (320).
- Opening a closing and opening valve (131) located at the bottom of the reactor (100) and removing the product processed.

30. The method according to claim 29, wherein the material to be processed is previously pre-processed and sized.

31. The method according to claim 29 or 30, wherein the material enters the reactor pushing and opening the overhead valve (113).

32. The method according to any of claims 29 to 31, wherein the reactor is filled with material up to about ¾ of its capacity.

33. The method according to any of claims 29 to 32, wherein after the entry of all material inside the reactor (100), the overhead valve (113) returns to its predefined position (113).

34. The method according to any of claims 29 to 33, wherein the temperature inside the reactor (100) is automatically controlled by the turning on and off of the heaters of the heating unit (310).
